Europäisches Patentamt

European Patent Office

Office européen des brevets

(11) Numéro de publication : **0 063 081**
**B1**

(12) # FASCICULE DE BREVET EUROPÉEN

(45) Date de publication du fascicule du brevet :
**17.07.85**

(51) Int. Cl.⁴ : **B 60 N   1/08**

(21) Numéro de dépôt : **82400620.9**

(22) Date de dépôt : **05.04.82**

(54) **Dispositif de montage de siège coulissant et règlable pour véhicule automobile.**

(30) Priorité : **07.04.81 FR 8107314**

(43) Date de publication de la demande :
**20.10.82 Bulletin 82/42**

(45) Mention de la délivrance du brevet :
**17.07.85 Bulletin 85/29**

(84) Etats contractants désignés :
**DE GB IT**

(56) Documents cités :
**EP-A- 0 028 564**
**DE-B- 1 037 878**
**FR-A-   889 640**
**FR-A- 2 243 838**
**FR-A- 2 419 839**

(73) Titulaire : **AUTOMOBILES CITROËN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Fabre, Eric**
**20, rue d'Epinay**
**F-91700 Sainte Geneviève des Bois (FR)**

(74) Mandataire : **Boivin, Claude**
**9, rue Edouard-Charton**
**F-78000 Versailles (FR)**

Jouve, 18, rue St-Denis, 75001 Paris, France

## Description

La position des sièges des véhicules automobiles est, en général, réglable longitudinalement. A cet effet, les sièges sont jusqu'à présent montés directement ou à l'aide de pièces intermédiaires sur le plancher du véhicule par l'intermédiaire de glissières à billes. Ces glissières sont lourdes, fragiles et coûteuses.

Le brevet FR-A-889 640 décrit un siège de véhicule comprenant deux chariots latéraux montés coulissants par rapport à la carrosserie du véhicule et portant chacun deux paires de galets entre lesquels peut se déplacer l'armature du siège. Dans chacun de ces chariots est monté pivotant un premier pignon en prise avec une crémaillère fixe et un second pignon en prise avec une crémaillère solidaire de l'armature, les premiers pignons et les seconds pignons étant reliés entre eux par des arbres de liaison transversaux. Ce siège ne peut pratiquement pas être désolidarisé de la carrosserie.

La présente invention a pour objet un dispositif de montage d'un siège de véhicule comprenant deux éléments transversaux parallèles, une crémaillère longitudinale solidaire de l'assise du siège, un moyen denté coopérant avec la crémaillère, et des galets de support immobilisés axialement et pouvant rouler sur des pistes d'appui de l'assise du siège, qui évite l'utilisation de glissières et permet en outre, si on le désire, de séparer le siège de la carrosserie.

Le dispositif selon l'invention est caractérisé en ce que les éléments transversaux sont constitués par deux entretoises reliées à chacune de leurs extrémités aux membrures latérales de la carrosserie et sur lesquelles sont montés à rotation les galets de support, et en ce que le dispositif comprend, en outre, au moins deux pontets qui sont fixés à l'assise de manière au moins partiellement amovible et dont chacun embrasse l'une des entretoises en maintenant les pistes d'appui sur les galets de support, les pontets ou certaines des pistes d'appui comportant une nervure engagée dans une gorge du galet correspondant ou inversement, ce galet constituant ainsi un galet de guidage.

Lorsque la crémaillère est libérée, il est possible de régler la position longitudinale du siège, dans la limite permise par les pontets, les pistes d'appui ayant un mouvement de translation sur les galets. Par ailleurs, les pontets maintiennent le siège sur les entretoises et l'empêchent ainsi de se séparer intempestivement des entretoises, par exemple de basculer vers l'avant en cas de choc frontal. Les entretoises présentent l'avantage supplémentaire de renforcer la structure de la carrosserie au niveau de la ligne d'assise, de sorte que la carrosserie résiste particulièrement bien aux effets des forces développées lors d'un impact latéral et que le pilote et le passager sont protégés en une zone où la sécurité est essentielle.

Dans un mode de réalisation dans lequel la crémaillère est en prise avec un pignon monté sur l'un des éléments transversaux, l'un des galets de guidage comporte une partie dentée constituant le pignon, la crémaillère formant piste d'appui, et le dispositif comporte des moyens permettant d'immobiliser le galet en rotation. Lorsque le galet est immobilisé, la crémaillère ne peut se déplacer et le siège est verrouillé en position. En revanche, il est possible de déplacer longitudinalement le siège lorsque le galet est libéré.

Dans un autre mode de réalisation, le dispositif comporte une poignée qui est montée basculante sur l'entretoise avant et comprend une partie dentée propre à venir en prise avec la crémaillère sous l'action de moyens élastiques. Lorsque cette partie dentée est en prise avec la crémaillère, le siège est immobilisé. Par contre, il est possible de le déplacer si on fait basculer la poignée de façon à dégager sa partie dentée de la crémaillère.

Le galet de guidage coopérant avec le pontet peut être un galet au contact d'une piste d'appui, il constitue ainsi à la fois un galet de guidage et un galet de support. Mais, dans ce cas, le galet pris en tenaille entre la piste d'appui et le pontet, roule sur le pontet dans le sens contraire au sens de déplacement sur ce pontet, de sorte qu'il y a frottement. Pour diminuer ce dernier, on peut munir la nervure du galet ou du pontet d'une piste en une matière anti-friction, de préférence souple et légèrement comprimée.

Le galet de guidage coopérant avec le pontet peut également ne pas coopérer avec les pistes d'appui, c'est-à-dire ne pas être un galet de support. Lorsque le siège est déplacé, le galet dégagé des pistes roule alors sans frottement sur le pontet, en pivotant dans le sens contraire au sens de rotation des galets coopérant avec les pistes d'appui.

Dans un autre mode de réalisation de l'invention, l'une des entretoises porte un galet de guidage et d'arrêt disposé sensiblement dans le plan médian longitudinal du siège alors que l'autre entretoise porte deux galets de guidage disposés au voisinage des bords latéraux du siège.

On a décrit ci-après, à titre d'exemples, divers modes de réalisation du dispositif de montage selon l'invention, avec référence aux dessins annexés dans lesquels :

La Figure 1 est une vue en élévation d'un siège monté selon l'invention.

La Figure 2 en est une coupe transversale suivant II-II de la Figure 1.

La Figure 3 en est une coupe transversale suivant III-III de la Figure 1.

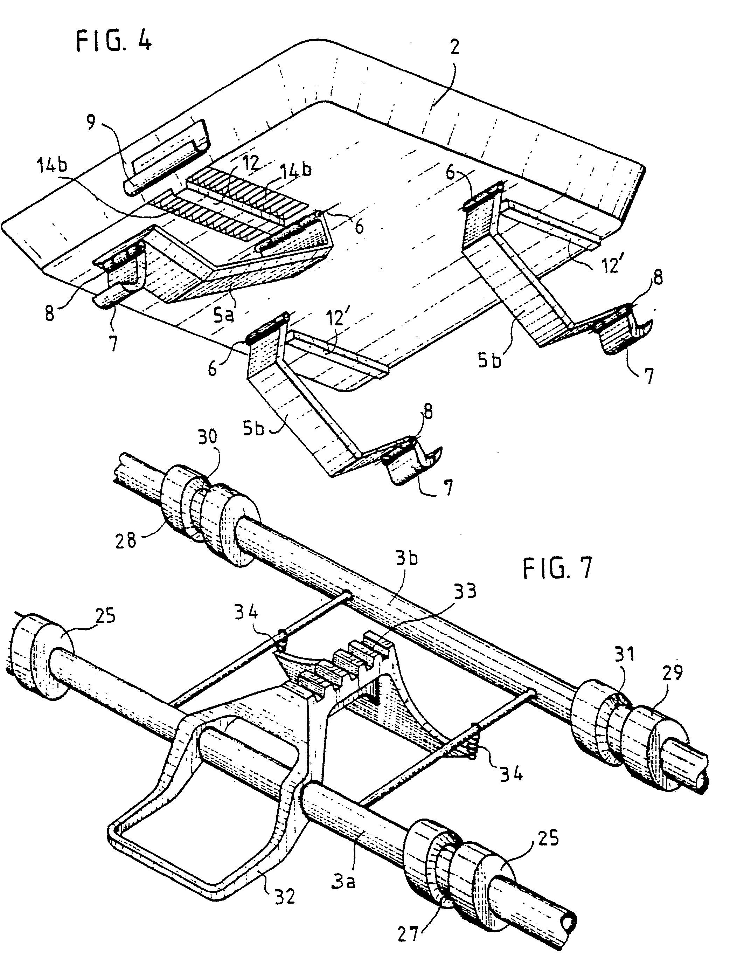

La Figure 4 est une vue en perspective par en dessous de l'assise du siège de la Figure 1.

La Figure 5 est une vue en coupe transversale d'une variante.

La Figure 6 est une vue en coupe transversale d'une autre variante.

La Figure 7 est une vue en perspective d'un détail d'une autre variante.

Au dessin, on voit un siège de véhicule dont l'assise 1 repose sur un socle 2. Ce dernier repose à son tour par l'intermédiaire de galets sur deux entretoises tubulaires avant 3a et arrière 3b dont les extrémités sont fixées aux membrures latérales 4 de la carrosserie du véhicule. Deux pontets 5a et 5b fixés sous le socle 2 emprisonnent les entretoises 3a et 3b de sorte que le socle 2 peut se déplacer dans la direction longitudinale du véhicule mais ne peut normalement pas être séparé de la carrosserie. Dans l'exemple représenté, chacun des pontets est articulé par l'une de ses extrémités en 6 sur le socle 2 ; son autre extrémité est fixée à ce socle par un crochet de verrouillage 7 qui est articulé en 8 sur le pontet et peut s'engager dans un bec 9 fixé au socle.

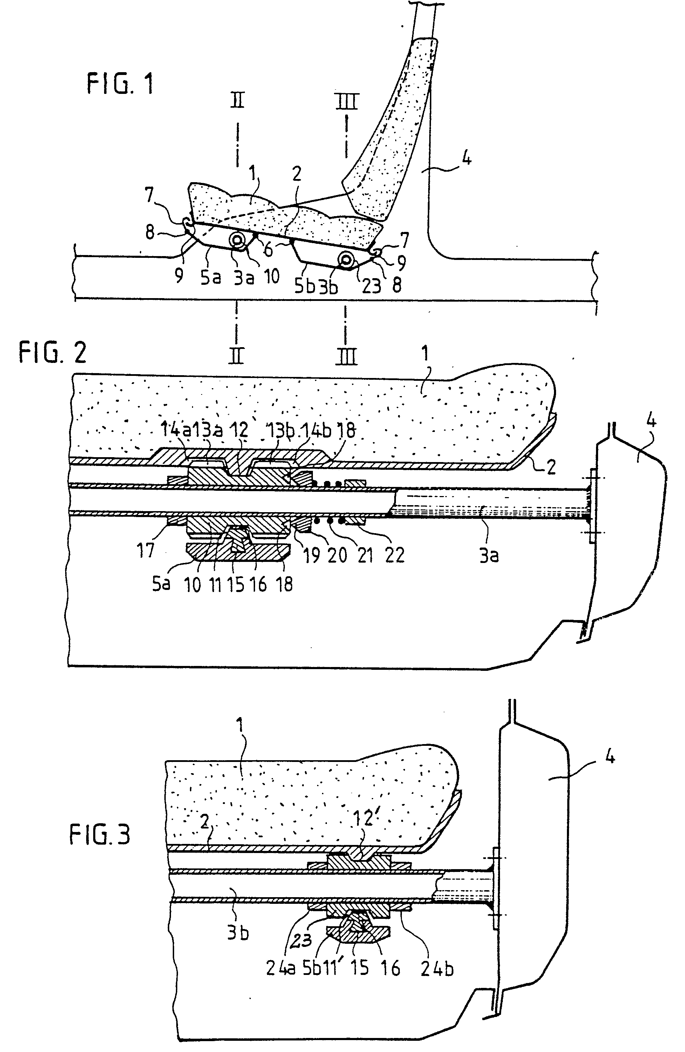

Comme on le voit plus particulièrement à la figure 2, un galet 10 est monté à rotation sur l'entretoise avant 3a, sensiblement dans le plan médian longitudinal du siège. Ce galet comporte une gorge centrale 11 dans laquelle est engagée une saillie médiane rectiligne 12 prévue sous le socle 2. De part et d'autre de cette gorge centrale, le galet 10 est taillé en pignons 13a et 13b qui sont en prise avec des crémaillères 14a et 14b fixées sous le socle 2. Il est prévu un seul pontet 5a qui se trouve en regard de la saillie 12. Ce pontet porte une saillie médiane 15 qui est munie d'une piste de friction 16 engagée dans la gorge 11.

L'un des flancs du galet 10 est en appui contre une butée 17 fixée sur l'entretoise 3a. L'autre flanc de ce galet présente une série de cavités 18 dans lesquelles sont normalement logés des tocs 19 faisant saillie latéralement par rapport à un plateau 20. Ce plateau est claveté coulissant sur l'entretoise 3a ; un ressort 21 interposé entre ce plateau et une butée 22 fixée sur l'entretoise 3a tend à maintenir les tocs 19 dans les cavités 18, ce qui empêche le galet 11 de pivoter par rapport à l'entretoise donc au socle 2 de se déplacer longitudinalement.

De son côté, l'entretoise arrière 3b porte, au voisinage de chacun des bords latéraux de l'assise 1, un galet 23 qui peut pivoter librement sur cette entretoise. Ce galet a une périphérie lisse mais comporte, comme le galet 10, une gorge centrale 11' dans laquelle est engagée une saisllie rectiligne 12' prévue sous le socle 2. Ce galet est immobilisé latéralement par deux butées 24a et 24b fixées sur l'entretoise 3b. Il est prévu deux pontets 5b dont chacun se trouve en regard d'un des galets 23. Comme le pontet 12a, ces pontets 12b comportent une saillie médiane 15 qui est munie d'une piste de friction 16 engagée dans la gorge 11' du galet correspondant 23.

En temps normal, le galet 10 est immobilisé et le siège ne peut se déplacer longitudinalement. Mais, si on écarte le plateau 20 du galet 10, par un moyen non représenté au dessin, le galet 10 est libéré et peut pivoter. Le siège peut se déplacer longitudinalement en prenant appui sur le galet avant 10 et sur les galets arrière 23. Pendant ce mouvement, le siège est guidé par les crémaillères 13a et 13b et par les saillies 12 et 12' engagées dans les gorges 11 et 11' des galets. Si on libère le plateau 20, les tocs 19 s'engagent dans les cavités 18 et immobilisent à nouveau le galet 10 sur l'entretoise 3a, le siège se trouvant ainsi verrouillé dans sa nouvelle position. On voit qu'il est donc possible de régler la position longitudinale du siège, dans les limites autorisées par les pontets 5a et 5b.

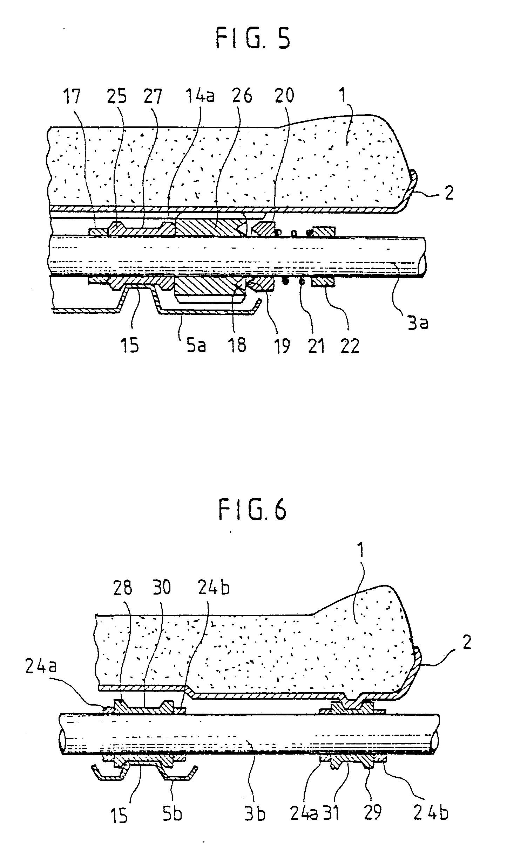

Dans le mode de réalisation de la figure 5, le galet 10 est remplacé par un ensemble de deux galets 25 et 26, tous deux montés à rotation sur l'entretoise. Le galet 25 qui assure le guidage du siège n'est pas denté et comporte une gorge centrale 27 dans laquelle est engagée la saillie 15 du pontet 5a, cette saillie étant ici constituée par un embouti du pontet. De son côté, le galet 26 est denté et en prise avec la crémaillère 14 qui forme piste d'appui. Comme le galet 10, ce galet porte sur l'un de ses flancs des cavités 18 dans lesquelles peuvent s'engager les tocs 19 du plateau 20. Quand on déplace le siège, les deux galets 25 et 26 pivotent en sens contraire, le galet 25 roulant sans frottement sur la saillie 15. Si on le désire, on peut prévoir un deuxième galet denté sur l'autre flanc du galet 25.

Dans le mode de réalisation de la figure 6, le galet 23 est remplacé par un ensemble comprenant un galet central 28 et deux galets latéraux 29. Le galet central 28 comporte une gorge centrale 30 dans laquelle est engagée la saillie 15 du pontet 5b, celui-ci étant disposé dans le plan médian longitudinal du socle 2. Chacun des galets latéraux 29 comporte également une gorge centrale 31 dans laquelle est engagée l'une des saillies 12' du socle 2. Chacun de ces galets est immobilisé latéralement par deux butées 24a et 24b, fixées sur l'entretoise. Là encore, lorsque le siège est déplacé, les galets 28 et 29 peuvent pivoter en sens contraire, donc rouler sans frottement sur les saillies sur lesquelles ils sont engagés.

Dans le mode de réalisation de la figure 7, le galet denté 10 est encore remplacé par un galet lisse 25. Pour verrouiller le siège en position, il est prévu une poignée 32 qui est montée basculante sur l'entretoise 3a et porte une denture 33 qui peut s'engager, sous l'action de ressorts 34, dans une crémaillère prévue sous le socle 2. Comme ici, cette crémaillère ne forme pas piste d'appui pour le siège, l'assise comporte une nervure 12 engagée dans la gorge 27 du galet 25.

Les galets de guidage pourraient comporter non pas des gorges, mais des nervures périphériques engagées dans des gorges des pistes d'appui et des pontets.

**Revendications**

1. Dispositif de montage d'un siège de véhicule automobile, comprenant deux éléments transversaux parallèles (3a, 3b), une crémaillère longitudinale (14a 14b) solidaire de l'assise du siège, un moyen denté (13a, 13b) coopérant avec la crémaillère, et des galets de support immobilisés axialement et pouvant rouler sur des pistes d'appui (12, 12') de l'assise du siège, caractérisé en ce que les éléments transversaux sont constitués par deux entretoises (3a-3b) reliées à chacune de leurs extrémités aux membrures latérales (4) de la carrosserie et sur lesquelles sont montés à rotation les galets de support (10, 23, 25 ou 28), et en ce que le dispositif comprend, en outre, au moins deux pontets (5a et 5b) qui sont fixés à l'assise de manière au moins partiellement amovible et dont chacun embrasse l'une des entretoises en maintenant les pistes d'appui sur les galets de support, les pontets ou certaines des pistes d'appui comportant une nervure (12-12' ou 15) engagée dans une gorge (11, 11') du galet (10, 23) correspondant ou inversement, ce galet constituant ainsi un galet de guidage.

2. Dispositif selon la revendication 1, la crémaillère (13a ou 13b) étant en prise avec un pignon monté sur l'un des éléments transversaux, caractérisé en ce que l'un des galets de guidage (10, 26) comporte une partie dentée (13a-13b) constituant le pignon, la crémaillère (14a ou 14b) formant piste d'appui, et en ce que le dispositif comporte des moyens (18, 19) permettant d'immobiliser le galet en rotation.

3. Dispositif selon la revendication 2, caractérisé en ce que lesdits moyens d'immobilisation comprennent un plateau (20) à tocs latéraux multiples (19) claveté coulissant sur l'entretoise correspondante (3a) et soumis à l'action de moyens élastiques (21) qui tendent à déplacer latéralement le plateau (20) et à engager ses tocs (19) dans des logements (18) ménagés sur l'une des parois latérales du galet denté (10) des moyens étant prévus pour déplacer le plateau à l'encontre des moyens élastiques.

4. Dispositif selon la revendication 1, caractérisé en ce qu'il comporte une poignée (32) qui est montée basculante sous l'entretoise avant (3a) et comprend une partie dentée (33) propre à venir en prise avec la crémaillère sous l'action de moyens élastiques (34).

5. Dispositif selon l'une quelconque des revendications précédentes, caractérisé en ce que chacun des pontets (5a ou 5b) est monté articulé par rapport à l'assise du siège et verrouillable en position accrochée au socle (2) de l'assise.

6. Dispositif selon l'une des revendications précédentes, caractérisé en ce que la nervure (15) du pontet ou du galet coopérant avec ce pontet est munie d'une piste (16) en une matière antifriction, de préférence souple et légèrement comprimée.

7. Dispositif selon l'une des revendications 1 à 6, caractérisé en ce que l'une (3a) des entretoises porte un galet de guidage (10) disposé sensiblement dans le plan médian longitudinal du siège alors que l'autre entretoise (3b) porte deux galets de guidage (23) disposés au voisinage des bords latéraux du siège.

## Claims

1. A device for mounting a motor vehicle seat, comprising two parallel transverse elements (3a, 3b), a longitudinal rack (14a, 14b) is integral with the sitting portion of the seat, a toothed means (13a, 13b) cooperating with the rack, and support rollers secured against axial movement and able to roll over tracks (12, 12') bearing the sitting portion of the seat, characterized in that the transverse elements are formed by two cross pieces (3a-3b) connected at each of their ends to the side members (4) of the body work and on which the support rollers (10, 23, 25 or 28) are mounted for rotation, and in that the device further comprises at least two bridges (5a and 5b) which are fixed to the sitting portion so as to be at least partially removable and each of which embraces one of the cross pieces while holding the support tracks on the support rollers, the bridges or some of these support tracks comprising a rib (12-12' or 15) engaged in a groove (11, 11') in the corresponding roller (10, 23) or conversely, this roller thus forming a guide roller.

2. Device according to claim 1, with the rack (13a or 13b) engaged with a pinion mounted on one of the transverse elements characterized in that one of the guide rollers (10, 26) comprises a toothed portion (13a-13b) forming the pinion, the rack (14a or 14b) forming a support track, and in that the device comprises means (18, 19) for securing the roller against rotation.

3. Device according to claim 2, characterized in that said means for securing the roller againts rotation comprise a plate (20) with multiple lateral catches (19), keyed for sliding on the corresponding cross piece (3a) and subjected to the action of resilient means (21) which tend to move the plate (20) laterally and to engage its catches (19) in housings (18) formed in one of the side walls of the toothed roller (10), means being provided for moving the plate against the resilient means.

4. Device according to claim 1, characterized in that it comprises a handle (32) which is pivotably mounted on the front cross piece (3a) and comprises a toothed portion (33) adapted for engagement with the rack under the action of resilient means (34).

5. Device according to any one of the preceding claims, characterized in that each of the bridges (5a or 5b) is pivotably mounted with respect to the sitting portion of the seat and is lockable in a position in engagement with the base (2) of the sitting portion.

6. Device according to one of the preceding claims, characterized in that the rib (15) of the bridge or of the roller cooperating with this bridge is provided with a track (16) made from an anti friction material, preferably flexible and slightly compressed.

7. Device according to one of claims 1 to 6, characterized in that one (3a) of the cross pieces supports a guide roller (10) disposed substantially in the longitudinal median plane of the seat whereas the other cross piece (3b) supports two guide rollers (23) disposed in the vicinity of the side edges of the seat.

## Patentansprüche

1. Befestigungsvorrichtung für einen Kraftfahrzeugsitz mit zwei parallelen, in Querrichtung angeordneten Elementen (3a, 3b), einer in Längsrichtung angeordneten mit dem Sitzteil des Sitzes kraftschlüssig verbundenen Zahstange (14a, 14b), einem mit der Zahnstange zusammenwirkenden, gezahnten Mittel (13a, 13b) und Stützrollen, die in axialer Richtung festgelegt sind und auf Stützbahnen (12, 12') des Sitzteiles des Sitzes abrollen können, dadurch gekennzeichnet, daß die in Querrichtung angeordneten Elemente durch zwei Querstreben (3a, 3b) gebildet werden, die an jedem ihrer Enden mit den seitlichen Rahmenteilen (4) der Karrosserie verbunden sind und an denen die Stützrollen (10, 23, 25 oder 28) drehbar befestigt sind, und daß die Vorrichtung außerdem mindestens zwei Bügel (5a, 5b) aufweist, welche am Sitzteil in mindestens teilweise abnehmbarer Weise befestigt sind und von denen jeder ein der Querstreben umfaßt und dadurch die Stützbahnen auf den Stützrollen festhält, wobei die Bügel oder bestimmte Stützbahnen eine Rippe (12, 12' oder 15) aufweisen, die in eine Rille (11, 11') der entsprechenden Rolle (10, 23) oder umgekehrt eingreift, so daß diese Rolle eine Führungsrolle darstellt.

2. Vorrichtung nach Anspruch 1, bei der sich die Zahnstange (13a oder 13b) mit einem an einem der in Querrichtung angeordneten Elemente montierten Zahnrad in Eingriff befindet, dadurch gekennzeichnet, daß eine der Führungsrollen (10, 26) einen gezahnten Teil (13a, 13b) aufweist, der das Zahnrad bildet, und die Zahnstange (14a oder 14b) die Stützbahn bildet, und daß die Vorrichtung Mittel (18, 19) zum Verriegeln der Rolle gegen Drehung aufweist.

3. Vorrichtung nach Anspruch 2, dadurch gekennzeichnet, daß die besagten Mittel zum Verriegeln einen Teller (20) mit einer Mehrzahl von seitlichen Mitnehmern (19) aufweisen, der verschiebbar auf der entsprechenden Querstrebe (3a) festgekeilt und der Wirkung von elastischen Mitteln (21) unterworfen ist, die die Neigung haben, den Teller (20) seitlich zu verschieben und seine Mitnehmer (19) in Eingriff mit Widerlagern (18) zu bringen, die an einer der Seitenwände der gezahnten Rolle (10) angeordnet sind und das Mittel zum Verschieben des Tellers gegen die Wirkung der elastischen Mittel vorgesehen sind.

4. Vorrichtung nach Anspruch 1, dadurch gekennzeichnet, daß sie einen Griff aufweist, der schwenkbar unter der vorderen Querstrebe (3a) angeordnet ist und einen gezahnten Teil (33) besitzt, der dazu geeignet ist, unter der Einwirkung elastischer Mittel (34) in Eingriff mit der Zahnstange zu kommen.

5. Vorrichtung nach einem der vorhergehenden Ansprüche, dadurch gekennzeichnet, daß jeder der Bügel (5a oder 5b) in Bezug auf das Sitzteil des Sitzes gelenkig befestigt und in der am Sockel (2) des Sitzteils angehängten Position verriegelbar ist.

6. Vorrichtung nach einem der vorhergehenden Ansprüche, dadurch gekennzeichnet, daß die Rippe (15) des Bügels oder der mit diesem Bügel zusammenwirkenden Rolle mit einer Bahn (16) aus einem reibungsvermindernden, vorzugsweise biegsamen und leicht komprimierten Material versehen ist.

7. Vorrichtung nach einem der Ansprüche 1 bis 6, dadurch gekennzeichnet, daß eine (3a) der Querstreben eine Führungsrolle (10) trägt, die im wesentlichen in der Längsmittelebene des Sitzes angeordnet ist, während die andere Querstrebe (3b) zwei Führungsrollen (23) trägt, die in der Nähe der seitlichen Ränder des Sitzes angeordnet sind.

FIG. 1

FIG. 2

FIG. 3

FIG. 4

FIG. 7

# FIG. 5

17  25  27  14a  26  20  1

2

15  5a  18  19  21  22  3a

# FIG. 6

1

28  30  24b

2

24a

15  5b  3b  24a 31  29  24b